# EUROPEAN PATENT SPECIFICATION

(11) **EP 1 665 135 B1**
(45) Date of publication and mention of the grant of the patent: **17.08.2016**
(21) Application number: 04768368.5
(22) Date of filing: 08.09.2004
(51) Int. Cl.: G06K 19/077, G06K 19/04, B65D 55/02

(54) **BOTTLE CAP**
FLASCHENVERSCHLUSSKAPPE
BOUCHON POUR BOUTEILLES

(30) Priority: 08.09.2003 US 657283; 12.12.2003 US 734813; 13.02.2004 US 779517; 17.08.2004 US 920094
(43) Date of publication of application: 07.06.2006
(73) Proprietor: Claessens, Frances, M., Barkham, Berkshire RG40 4PN (GB); Kipp, Timo, W., London SW3 1LG (GB)
(72) Inventor: Claessens, Frances, M., Barkham, Berkshire RG40 4PN (GB); Kipp, Timo, W., London SW3 1LG (GB)
(74) Representative: Wilson Gunn
(86) International application number: PCT/GB2004/003821
(87) International publication number: WO 2005/024745

(56) References cited:
- EP-A- 1 274 061
- US-A1- 2002 097 282
- US-A1- 2002 135 481
- US-A1- 2003 061 705

## Description

### FIELD OF THE INVENTION

The invention relates generally to bottle caps and to seals for containers. In particular it relates to an apparatus and method that detects tampering with containers that are sealed with caps, such as bottles, and prevents counterfeiting thereof. More specifically, in a first embodiment, an RFID tag attached to a bottle is disabled upon tampering with the bottle. The invention further relates generally to an apparatus that electronically determines whether a tax for a product has been paid. In addition, it can verify the authenticity of the contents within a container closed with a cap, such as a bottle, and automatically disable itself when first opened.

### BACKGROUND OF THE INVENTION

The wine and spirits industry loses significant revenue due to illicit activities in the supply chain. One of the problems is a proliferation of counterfeit goods. Another problem is goods that have been tampered with, where a tamperer will drain them of their original contents and replace them with a cheap and inferior substitute. The concern with such illicit activities goes even beyond the loss of the sale itself because the proliferation of a poor quality counterfeit product may hurt the reputation of an otherwise well respected label. Furthermore, there are concerns that a counterfeit product or one that has been tampered with may be contaminated with substances that could cause serious health problems. The industry has tried to tackle this illicit activity by implementing countermeasures such as holograms to help identify a genuine product. However these efforts have been largely unsuccessful because counterfeiters have the capability of reproducing them. Consequently, counterfeit goods are virtually indistinguishable from the legitimate goods without directly examining the contents of such goods, which requires actually opening the packaging of such goods. In the case of most goods, and especially beverages and other foodstuffs, opening the packaging renders the goods worthless since they can not be resold. Therefore, there is a need for a secure system that will allow anyone in the supply chain, from the manufacturer to the customer, to easily detect whether a container has been tampered with or is counterfeit.

It is therefore an object of the present invention to provide an improved apparatus and method for detecting tampering with containers which can not be easily duplicated by counterfeiters.

It is a further object of the present invention to provide an improved apparatus and method for detecting tampering with containers with allows anyone in the supply chain to detect whether a container has been tampered with or is counterfeit.

However, the use of an RFID tag with a metal container closure or cap present certain design difficulties when compared to mounting an RFID tag within a plastic cap for a container, e. g. , a beverage bottle. The plastic material does not significantly affect the transmission of the electromagnetic signal transmitted to the RFID tag. As used herein, metal cap is understood to mean any metal closure for any type of container. Furthermore, references herein to bottles and metal caps for bottles is not to be understood as limiting the scope of the invention but merely illustrative of a particular application for the invention. At the high RF frequencies used for communication with an RFID tag, some transmitted signal energy will diffract and reflect into a metal cap from the open end of the metal cap so long as the fluid contents within the container remain below the bottom of the cap. However, a full container will likely prevent the RF signal from reaching an RFID tag mounted within a metal cap. Furthermore, since an RFID tag normally does not include an integral battery and is powered by the received RF energy, sufficient RF energy has to reach the RFID tag to power the integrated circuit chip on the RFID tag. It is unlikely that this would occur for an RFID tag mounted within a metal cap absent special circumstances, such as positioning the interrogator antenna at a very close range and at a specific orientation to the metal cap. Consequently, a conventional RFID tag mounted completely inside a metal cap does not appear to be practical.

Microstrip antenna technology originated in microwave transmission lines etched into radio frequency integrated circuits and into copper-clad printed circuit boards. A microstrip transmission line is a metal conductor path (usually etched copper) separated from an expansive conducting surface (ground plane) by an insulating dielectric layer. The width of the transmission line and the thickness of the dielectric medium determine the characteristic impedance of the transmission line, and thereby the efficiency of RF power transmission from one device to another. If the length of the microstrip transmission line is adjusted to be one-half the wavelength of RF waves in the dielectric layer, and if one or both ends of the transmission line are not connected to a device, then that transmission line radiates energy (or receives it) as an antenna. Consequently, the same technology and the same process steps can be used to produce an antenna and the necessary impedance matching components, resulting in lower manufacturing costs.

For these reasons, microstrip antennas are commonly used in connection with the interrogator of a RFID system. These antennas have the desirable characteristic of laying flat on a surface with minimum protrusion from that surface. However, they are not commonly used on RFID tags, primarily for the following three reasons: 1) The characteristic length of a simple microstrip antenna is one-half of the wavelength, whereas it is one-quarter of the wavelength for an electric dipole antenna. Consequently, for a given frequency of operation, the microstrip antenna must be twice the length the electric dipole antenna. 2) The simplest microstrip antennas have a narrower bandwidth than the electric dipole antenna, resulting in tighter manufacturing tolerances for the microstrip antenna. 3) Since the patch of the microstrip antenna is more massive than the wire antenna, the RFID tag IC chip must have more substantial power conversion and switching devices than is necessary for the wire antenna in order to modulate the backscattered RF energy return to the interrogator.

The use of a microstrip antenna for an RFID tag has been disclosed in U.S. Patent No. 6,215, 402, which includes several designs for patch antennas and impedance matching components for an RFID tag, and U.S. Patent No. 6,329, 915, which describes the use of an additional insulating material with high electric permittivity that is applied to the surface on top of the microstrip antenna in order to further reduce the size of the antenna. However, neither of these patents discloses the use of an RFID tag having a microstrip antenna on a metal closure for a container.

The use of specially designed slots etched into the interior of a patch antenna to broaden the bandwidth of a microstrip antenna without changing the overall form factor of the antenna is disclosed in an article by Ali, Sittironnarit, Hwang, Sadler, and Hayes, entitled "Wideband/Dual-Band Packaged Antenna for 5-6 GHz WLAN Application," that appeared in the February, 2004 issue of the journal IEEE Transactions on Antennas and Propagation. However, this article does not disclose the use of an RFID tag having a microstrip antenna on a metal bottle cap.

Another problem associated with the sale of the alcoholic beverages is insuring that the tax or duty has been paid each bottle sold. It has been estimated that many millions of dollars of governmental revenues are lost each year because required taxes are not paid. One solution currently under discussion in the United Kingdom is to have stamps, in the form of strips of paper, placed over the top of the bottle's package to show that the tax has been paid for that package.

It is anticipated that radio frequency identification ("RFID") devices (commonly called "RFID tags") will soon replace bar codes as the chief way to identify goods. An RFID tag is pre-encoded to include information about the associated product to which it is attached or to contain a distinctive identification code. When an RFID tag is interrogated by an external reader, it will provide a radio signal containing that pre-encoded data. Thus, for example, a code can be encoded within the RFID tag that defines the product during checkout and this information can be read (instead of a bar code) to determine the type of goods and calculate its price (which is either also encoded in the RFID tag or stored in a main database and obtained based upon the product code). However, a great deal of concern has arisen recently relative to privacy issues because conventional RFID tags continue to be active long after a product has been purchased. This means that third parties can continue to read the information in the RFID tag for the life of the product, for example, allowing these third parties to generate information about a person's shopping tendencies without their knowledge.

As a result, although RFID tags can be used to distinguish between legitimate goods and counterfeit goods because the counterfeit goods will not include valid RFID tags because of the difficulty in reproducing RFID tags, the use of such RFID tags on goods is likely to raise privacy concerns if the RFID tag remains active for the life of the product.

US Patent application 2002/0097282A1 discloses an RIFD tag mounted to a container for taxable goods which is destroyed opening of the container.

It is another object of the present invention to provide an RFID tag for an alcoholic beverage package which can be programmed to verify that any applicable tax or duty for that package has been paid.

It is yet another object of the present invention to provide an improved apparatus and method for verifying the authenticity of the contents of a container which can not be easily duplicated by counterfeiters and which is permanently disabled upon the opening of the container for the first time.

It is a further object of the present invention to provide an improved apparatus and method for verifying the authenticity of the contents of a container which can also be permanently disabled electronically.

### SUMMARY OF THE INVENTION

In accordance with a first aspect of the invention, there is provided an apparatus for use in detecting the authenticity of a container sealed with a cap, comprising:
a radio frequency identification tag comprising a substrate, a radio frequency transceiver circuit adapted to transmit a signal upon receipt of a transmit command and mounted upon said substrate, an antenna having a fixed length mounted upon said substrate and connected to said radio frequency transceiver circuit, and a first interconnection means on said substrate;
a cap for a container having a cylindrical portion, a closed end of said cylindrical portion and an open end of said cylindrical portion; and
a second interconnection means connected to said container for engaging said first interconnection means when said cap is installed on said container such that removing said cap from said container will exert force on said substrate resulting in the fracture of said substrate thereby causing said radio frequency identification tag to become permanently disabled;
wherein said radio frequency identification tag is mounted on an inner surface of said cylindrical portion of said cap adjacent to said closed end such that said first interconnection means faces centrally inward and in that said first interconnection means is a protrusion affixed to said substrate or a slot in said substrate, and said second interconnection means comprises ratcheting means.

The apparatus may further comprise a security seal mounted over said substrate, said radio frequency transceiver circuit and said antenna.

In accordance with a second aspect of the invention, there is provided a method for use in detecting the authenticity of a container sealed with a cap, said cap having a cylindrical portion, a closed end of said cylindrical portion and an open end of said cylindrical portion, comprising the steps of:
mounting a radio frequency identification tag on said cap, the radio frequency identification tag comprising a substrate, a radio frequency transceiver circuit adapted to transmit a signal upon receipt of a transmit command and mounted upon said substrate, an antenna having a fixed length mounted upon said substrate and connected to said radio frequency transceiver circuit, and a first interconnection means on said substrate;
installing said cap on said container such that a second interconnection means connected to said container is engaged with said first interconnection means;
wherein said radio frequency identification tag is mounted on an inner surface of said cylindrical portion of said cap adjacent to said closed end such that said first connection means faces centrally inward; said first interconnection means is a protrusion affixed to said substrate or a slot in said substrate, and said second interconnection means comprises ratcheting means;
permanently disabling said radio frequency identification tag upon fracture of said substrate due to exertion of force on said substrate resulting from removal of said cap from said container and engagement between the first and second interconnections means.

In an embodiment, said antenna has a first end connected to the container and a second end connected to the cap, and said step of disabling is accomplished by separating portions of said antenna thereby preventing said radio frequency transceiver circuit from receiving any commands.

### BRIEF DESCRIPTION OF THE DRAWINGS

These and other objects and advantages of the invention, as well as the details of the illustrative embodiments, will be more fully understood by reference to the following portion of the specification, taken in conjunction with the accompanying drawings, in which:
FIG. 1 is a side view of an apparatus not according to the present invention integrated into a plastic security seal around a container and a cap;
FIG. 2 is a side view of an apparatus not according to the invention integrated into the cap and attached to a container
FIG. 3 is a top view of the electronic assembly in a variant of the apparatus integrated into the cap;
FIG. 4 is a block diagram of an electronic assembly in a second apparatus not according to the present invention;
FIG. 5 is a schematic drawing of the electronic circuit of the second apparatus of FIG. 4;
FIG. 6 is a timing diagram of input and output signals of various components in the electronic circuit of FIG. 5;
FIG. 7A is a perspective exploded view, FIG. 7B is a perspective view and FIG. 7C is a cross-sectional view of the apparatus according to the present invention;
FIGS. 8A, 8B and 8C are front, top and side views, respectively, of the RFID tag of the present invention;
FIGS. 9A and 9B are side and top views, respectively, of the bottle insert assembly of the present invention;
FIGS. 10A and 10B are side and top views of the central column portion of the bottle insert assembly of the present invention, FIGS. 10C and 10D are side and top views of the plain disc portion of the bottle insert assembly of the present invention and FIGS. 10E and 10F are side and top views, respectively, of the ratchet wheel portion of the bottle insert assembly of the present invention;
FIGS. 11A and 11B are bottom and side views of the bottle cap of the present invention;
FIGS. 12A and 12B show an exploded view of the 2 parts of the bottle cap of the present invention.
FIG. 13 is a sequential series showing the assembly of the bottle cap of FIG. 12;
FIG. 14 is an enlarged view of an embodiment of the top of the bottle insert assembly shown in FIG. 9a;
FIG. 15 is perspective view of a metal bottle cap including an RFID tag mounted on a top thereof;
FIG. 16 is a plot of the length of a microstrip antenna versus the dielectric permittivity of the corresponding insulating layer that is used to calculate the size of the microstrip antenna for different applications;
FIG. 17 is circuit diagram of a first variant of the apparatus of FIG. 15;
FIG. 18 is a circuit diagram of a second variant of the apparatus of FIG. 15; and
FIGS. 19A and 19B are circuit diagrams of a third variant of the apparatus of FIG. 15.

### DETAILED DESCRIPTION OF THE PREFERRED EMBODIMENTS

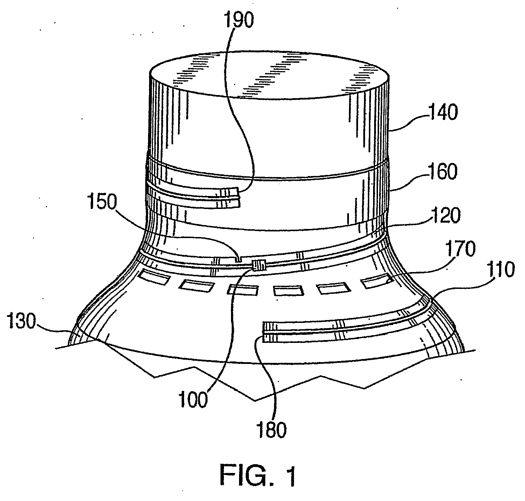

The first aspect of the present invention relates to an apparatus for detecting counterfeit or altered containers. FIG. 1 shows a side view of a first example of an apparatus not according to the present invention. In this example a radio frequency identification ("RFID") chip 100 is connected to an antenna 110 having predetermined transmission characteristics controlled by the length thereof so that the RFID chip 100 may respond to radio frequency signals sent from another device known as an interrogator. Preferably, the RFID chip 100 is the so-called "mu-chip" manufactured and sold by Hitachi, but could also constitute any similar product sold by other manufacturers, including but not limited to products from Nippon Electric in Japan and Intermec in the U.S. The RFID chip 100 is a radio frequency back-scatter transceiver that transmits a stored identification code upon receipt of a command to transmit. Preferably, RFID chip 100 is passive, i.e. it uses the received signal to power itself. As one of skill in the art will readily recognize, a non-passive chip (i.e. an active chip) could be used for RFID chip 100 so long as a power source, e. g., a battery, is also included.

The RFID chip 100 and the antenna 110 are mounted on a substrate 120, preferably formed of polyimide. The substrate 120 includes a perforation 150 close to where RFID chip 100 is mounted and is permanently affixed to a container 130 on a first end 180 and to a cap 140 that has sealed the container 130 on a second end 190. The substrate 120 is affixed in such a manner that the antenna 110 is wrapped around the circumference of the container 130 and the cap 20. When the cap 140 is twisted to remove it from the container 130 the polyimide substrate 120 ruptures at perforation 150. This causes a section of the antenna 110 to be separated and thus prevents the RFID chip 100 from transmitting or receiving signals from the interrogator, due to the change in the characteristics of antenna 110. In order to protect the RFID chip 100, the antenna 110 and the substrate 120 are preferably covered with a security seal 160 which has a multiplicity of perforations 170 along which it separates when the bottle cap 140 is removed from the bottle. The cap is preferably a plastic cap.

To verify the authenticity of the container 130, an interrogator is used to transmit an interrogation signal appropriate for the particular chip chosen for the RFID chip 100 (when the antenna 110 is connected and not separated). The interrogation signal may simply tell the RFID chip 100 to activate itself and send a response signal. Alternatively, the interrogation signal may be a more complex code or instruction that would require the RFID chip 100 to send a particular message in the response signal. Additionally, the response signal may contain information about the contents in the container such as the amount and type. The interrogator, however, will not receive a response signal if the container 130 has been opened, indicating it has been tampered with, or if the container 130 does not contain the apparatus at all, indicating that it is counterfeit, since RFID chip 100 will not receive the transmitted signal due to the change in characteristics of antenna 110. Therefore, in this first example a tampered bottle will be identified by its failure to respond to an interrogation.

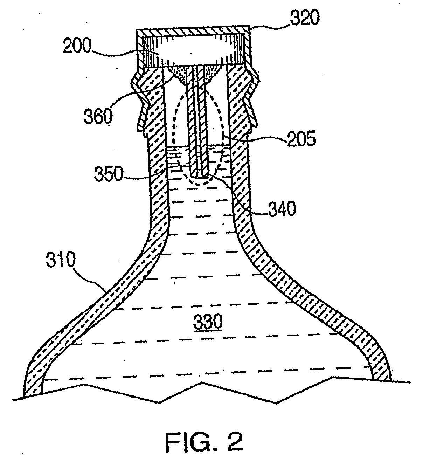

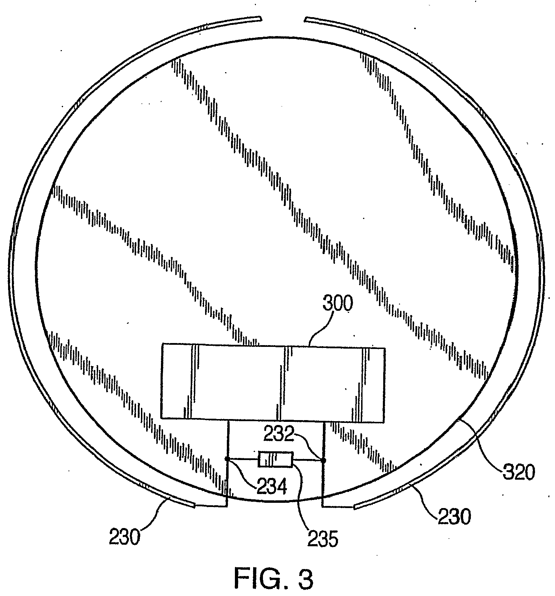

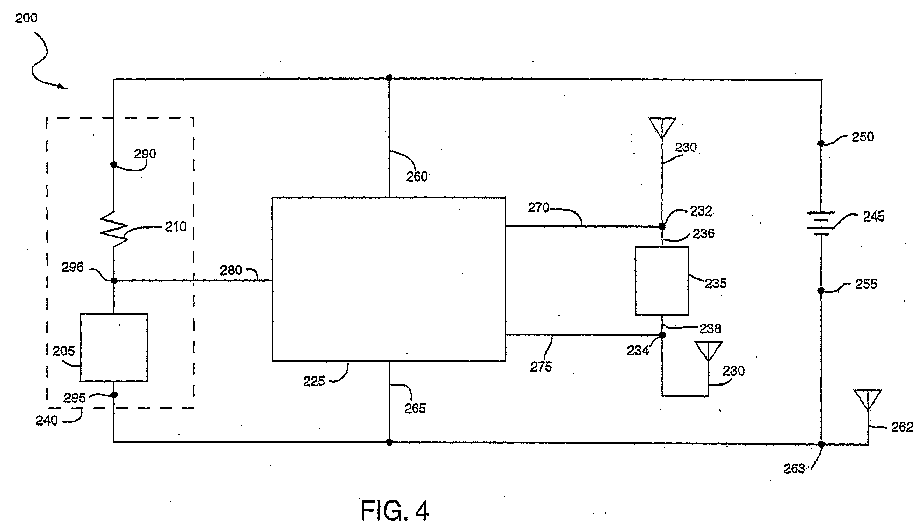

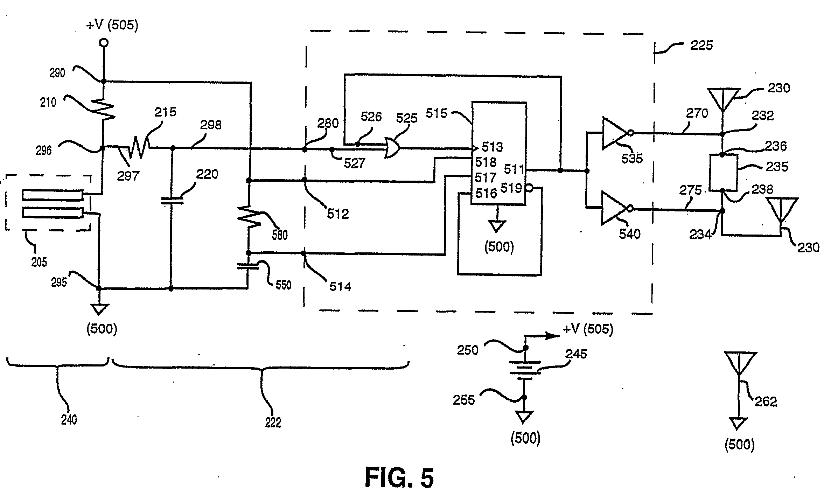

FIGS. 2 and 3 depict a second example not part of the present invention, and, in particular, show how electronic assembly 200 of FIGS. 4 and 5 is integrated into a cap 320 that seals a container 310.

FIG. 2 shows the electronic assembly 200 of FIGS. 4 and 5 integrated into a cap 320 and attached to a container 310. Probe 205 is formed from two rods 340 and 350, which are preferably substantially parallel to each other and conductive -- preferably made of stainless steel. Rods 340 and 350 protrude from a point that is substantially in the center of the cap 320. An adhesive 360 is preferably placed around the probe 205, in order to form a liquid tight seal ensuring that the other portions of the electronic assembly 200 are protected from contamination. The cap 320 seals the container 310 filled with contents 330, and, when sealed, the bottom portions of the rods 340 and 350 extend into the contents 330. The two rods 340 and 350 are sized to a length so that their end portions remain in contact with the contents 330 regardless of the angle at which the container 310 is oriented.

In FIG. 3, block 300 represents battery 245, logic chip 225, Q-spoiler antenna 262 and voltage divider 240 of FIG. 4. The components within block 300 and RFID chip 235 are encased within the cap 320 and the two portions of antenna 230 go around the circumference of the cap 320. As one of skill in the art will readily recognize, depending upon the size of the cap 320, the two antenna portions 230 may run along the inner circumference or the outer circumference of the cap 320, or may even be embedded within the walls of the cap 320.

FIG. 4 is a block diagram of the electronic assembly 200. The electronic assembly 200 is comprised of a probe 205, resistor 210, a logic chip 225, an RFID chip 235, a two-part antenna 230, a Q-spoiler antenna and a battery 245.

Resistor 210 combines with probe 205 to form a voltage divider 240. Preferably, resistor 210 has a resistance of 10 Mohm, but as one of skill in the art will readily recognize, this value depends on the resistance of probe 205. As shown in FIG. 2, voltage divider 240 includes three nodes, node 290, 295 and 296. As one of skill will readily recognize, when a fixed voltage is applied between nodes 290 and 295, a signal will be obtained between nodes 296 and 295 that will vary as the resistance of probe 205 changes.

Q-spoiler antenna 262 is an electrically conductive body of arbitrary size, shape and spatial orientation such that when it is electrically connected to antenna 230, by logic chip 225, the resonant property of antenna 230 is effectively diminished. In many cases, the Q-spoiler antenna 262 may be the negative electrode of battery 245.

Battery 245 has a positive terminal 250 and a negative terminal 255 and is used to excite the voltage divider 240 and to power logic chip 225, and is preferably of the lithium coin package style. Positive terminal 250 of battery 245 is connected to positive power connection 260 of the logic chip 225 and to node 290 of the voltage divider 240. The negative terminal 255 of battery 245 is connected to the negative power connection 265 (ground) to node 295 of the voltage divider 240, and to node 263 of the Q-spoiler antenna 262.

The logic chip 225, which is discussed in more detail with respect to FIG. 5, includes a positive input terminal 280 that is connected to a node 296 of the voltage divider 240. The logic chip 225 also has a first output terminal 270 and a second output terminal 275 that are connected to the antenna 230 at nodes 232 and 234, respectively. The RFID chip 235 also has a first output terminal 236 and a second output terminal 238 that are connected to the antenna 230 at node 232 and node 234, respectively. The voltage divider 240 provides a signal between nodes 296 and 295 that varies with the resistance of probe 205. The logic chip 225 monitors the signal provided by voltage divider 240, and, in turn, can generate an output signal on output terminals 270, 275 that prevents the RFID chip 235 from responding to an interrogation signal, depending on the input signal to logic chip 225 provided by voltage divider 240. Thus, for example, when probe 205 is immersed within the contents of a container, the resistance of probe 205 will be much lower than the resistance of resistor 210, and the voltage signal provided by voltage divider between nodes 296 and 295 will be low. Logic chip 225 allows RFID chip 235 to operate normally when the signal input at terminals 280, 265 is low (for the first instance of insertion of probe 205 into the contents of a container). However, if the contents of the container are emptied (or if the probe 205 is removed from the contents of the container), the resistance of probe 205 will greatly increase, generating a high voltage between nodes 296 and 295 (and thus at input terminals 280, 265), and causing logic chip 225 to disable RFID chip 235. If probe 205 is reinserted into the contents of the container, after having been removed from the container, logic chip 225 continues to disable RFID chip 235.

As discussed above, the voltage signal output between nodes 296 and 295 by the voltage divider 240 of FIG. 4 is a function of the resistance of probe 205, and thus is a function of the resistance between the rods 340 and 350. When the probe 205 is immersed in the contents 330 of the container 310, as shown in FIG. 4, the resistance between the rods 340 and 350 is of the order of 100 kohms and the voltage difference between nodes 296 and 295 of the voltage divider 240 will be low. However, when the probe 205 is removed from the contents 330, the resistance between the rods 340 and 350 is on the order of 100 Mohms, and the voltage difference between nodes 296 and 295 of the voltage divider 240 will be high. The voltage difference between nodes 296 and 295 of the voltage divider 240, therefore, provides an output signal that indicates whether the probe 205 is immersed in the contents 330.

As one of skill in the art will readily recognize, any mechanism that can detect the presence of a fluid (or other contents) in a container may be used instead of the voltage divider 240. For example, the level sensor may be a system that detects changes in the resonant frequency in the air space between the cap 320 and the contents 330. Other alternative level sensors include one that detects changes in the distance of a float that rests on top of the contents 330, or one that senses a change in air pressure within the container.

FIG. 5 is a schematic drawing that illustrates in detail the components comprising logic chip 225 of FIG. 4. In FIG. 5, all components common to FIG. 4 share the same reference number and operate in an identical manner. For convenience, battery 245 is shown with positive terminal 250 connected to +V (node 505) and the negative terminal 255 connected to common (node 500), and the power connections for logic chip 225 are not shown. In Fig. 5, Q-spoiler antenna 262 is shown connected to common (node 500).

The output of the voltage divider 240, i.e., the voltage between nodes 296 and 295, is provided to input terminal 297 of a series connection of resistor 215 and capacitor 220. The output terminal 298 of the series connection of resistor 215 and capacitor 220 is provided to input 527 of OR-gate 525, through input 280 of logic chip 225. The input port 527 of OR-gate 525 is a Schmitt trigger input, such as is constructed in the 74HC7002 specification of a 2-input OR gate. The combined effects of the series connection of resistor 215 and capacitor 220, together with the Schmitt trigger input of OR-gate 525 is a de-bounce circuit 222, as is commonly known to those of skill in the art. The output of de-bounce circuit 222 will be a logic high when probe 205 is not immersed in the contents of container 310 of FIG. 4, and will be a logic low when probe 205 is immersed in the contents of container 310. The Schmitt trigger output signal is clean and stable and essentially functions as a way to convert the noisy and naturally varying analog output signal of the voltage divider 240 into a digital signal.

The output signal of the OR-gate 525 is connected to the clock input 513 of D flip-flop 515. Input 513 is a positive-edge triggered clock input terminal of D flip-flop 515. The non-inverting output 511 of D flip-flop 515 is connected to a second input of OR-gate 525 (which may be a Schmitt trigger input, or may be a conventional input). The non-inverting output 511 of D flip-flop 515 also is connected to the single input terminals of first and second inverters 535 and 540 having open-drain outputs. A second output 519 of the D flip-flop 515 produces an inverted signal compared to the first output 511 and is fed back to a data input terminal 516 on the D flip-flop 515.

The output of the first and second inverters 535 and 540 are connected to the antenna 230 through the output terminals 270 and 275 of the logic chip 225. When their inputs are high, the low outputs of the first and second inverters 535 and 540 pull the outputs 236 and 238 of RFID chip 235 down, essentially shorting them to the Q-spoiling antenna 262, and preventing the RFID chip 235 from communicating with an interrogator.

D flip-flop 515 also includes a SET input 518 and a CLEAR input 517, both of which are asserted low. Thus, as shown in FIG. 5, the SET input 518 is tied to the positive terminal 250 of battery 245 (node 505) at input 512 and thus is inactive. In addition, an RC timing network comprising a resistor 580 and a capacitor 550 is connected between +V (node 505) and common (node 500). As one of skill in the art will readily recognize, the signal at node 514 will be low when power is first applied (e.g., when the battery 245 is installed) and will, at a rate determined by the RC time constant, charge up until a high level (i.e., +V) is reached. In the preferred embodiment, resistor 580 is 1 megohm and capacitor 550 is 1 microfarad. Thus, when the battery 245 is first installed, the input to D flip-flop 515 will be low, clearing the D flip-flop 515 of any prior states and setting the output 511 thereof low. Thereafter, the CLEAR input 517 will not change so long as the battery 245 is not removed.

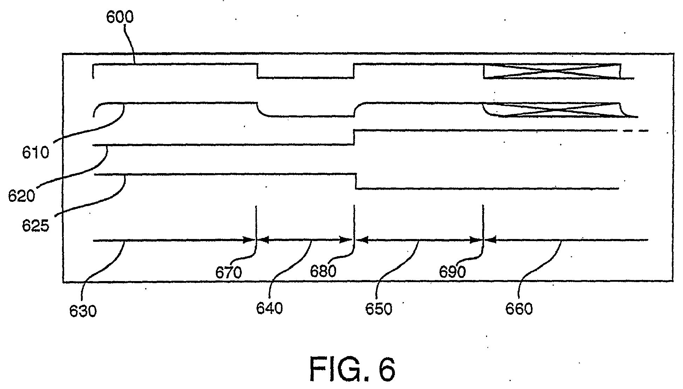

FIG. 6 is a timing diagram that illustrates the operation of logic chip 225. The first trace 600 represents the voltage across probe 205. The second trace 610 is the voltage at input 280 of logic device 225. The third trace 620 is the signal at the output 511 of the D flip-flop 515. The fourth trace 625 is the signal at output lines 270 and 275 which connect logic chip 225 to antenna 230. The first significant event occurs when battery 245 is installed, which must occur with the probe 205 not positioned in a fluid or other container contents. As such, the output of OR-gate 525 will be high, as discussed above, and the output of D-flipflop 515 will be low because it has been reset on installation of the battery 245, as discussed above. This is shown in the first portion 630 of the timing diagram of FIG. 6.

At point 670 the second significant event occurs, i.e., the cap 320 is installed on a container 310, so that probe 205 is put in contact with the contents 330 of container 310. During the periods 630 and 640 thereafter, the apparatus is "set" -- meaning that the RFID chip 235 will be able to respond to interrogation by an RFID interrogator. In particular, at point 670, the input 527 to OR-gate 525 begins to go low, becoming a low logic level in one millisecond or less, as determined by the values of resistor 215 and capacitor 220. When the input 527 to OR-gate 525 becomes low, the output of OR-gate becomes low. Since this negative-going edge signal is presented to the positive-edge-triggered clock input 513 of D flip-flop 515, there is no signal change at the outputs 511 and 519 of D flip-flop 515. Since the D flip-flop 515 had been cleared during battery insertion, the RFID chip 235 continues to be able to respond to interrogation by an RFID interrogator.

The third significant event 680 is the first removal of cap 320 (and the corresponding removal of probe 205 from the contents 330 of container 310). The logic chip 225 at this point disables the RFID chip 235 from communicating with an interrogator. In particular, upon the removal of probe 205 from the contents 330 of container 310, the input 527 to OR-gate 525 begins to go high, becoming a high logic level in one millisecond or less, as determined by the values of resistor 215 and capacitor 220. When the input 527 to OR-gate 525 becomes high, the output of OR-gate also becomes high. Since this positive-going edge signal is presented to the positive-edge-triggered clock input 513 of D flip-flop 515, the output toggles high, and the outputs 270 and 275 of the two inventors 535 and 540 short the antenna 230 to the Q-spoiler antenna 262. This is shown during period 650 of FIG. 6.

The fourth significant event 690 is any subsequent insertion or withdrawal of cap 320 to or from the contents 330 of container 310. As can be seen from FIG. 6, and in particular during period 660, regardless of the input 527 to OR-gate 525, the output of OR-gate 525 will not change again since input 526 is held high by output 511 of D flip-flop 515, and the output of D flip-flop 515 will not change again because it can only be clocked by a negative-to-positive transition in the output of OR-gate 525, thereby preventing the apparatus from being reset. Thus, once the cap 320 is removed from container 310, the RFID chip 235 is permanently disabled (unless, as one of skill in the art will readily recognize, the battery is removed and reinstalled). As a result, the container 310 will only be verified as authentic and not tampered with when it responds to interrogation -- which only occurs if cap 320 is not removed.

When interrogated, the RFID chip 235 may be programmed to respond with information identifying the particular container 310, the contents 330 of the container 310, the amount of contents 330 in the container 22 and/or any other information that may be useful.

In an alternative the RFID chip 235 may be combined with the logic chip 225 on a single integrated circuit. As one of skill in the art will readily recognize, in this situation it is possible to program two different codes into the RFID chip 235 that maybe transmitted when interrogated. In this situation, the apparatus includes logic that allows a first response to be generated to an interrogation prior to the cap 320 being removed from container 310, as above, and a second response generated after being removed from container 310. Furthermore, one of skill in the art will readily recognize that this added functionality may also be provided by modifying logic chip 225 accordingly.

The examples shown here offer a great flexibility in offering four independent features, in that the communication capabilities of each device may be controlled electronically (e.g., at the point of sale), mechanically (i.e., the tag is disabled once the cap is removed by separating two antenna portions), based upon liquid level (i.e., once the cap is removed or contents have been siphoned out) and lack of programmability (i.e., each tag has its information fixed upon manufacture).

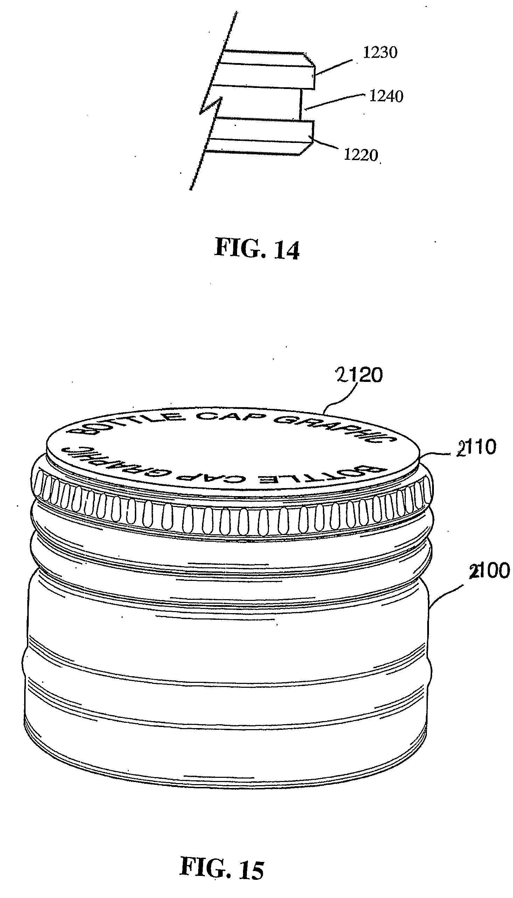

The second example relates to an apparatus and method for providing an RFID tag on a metal closure. Referring now to the drawing, and in particular to FIG. 15 thereof, therein illustrated is a metal cap 2100 having a RFID tag 2110 preferably employing a microstrip patch antenna (not shown) where the RFID tag 2110 is bonded to the top of metal cap 2100. The top surface 2120 of RFID tag 2110 can thereafter be decoratively printed in the same manner as conventional metal caps.

As discussed above, the IC chip of RFID tag 2110 may be located either outside the metal cap or inside the cap. Locating the chip outside the cap results in lower manufacturing costs since no feed-through connections are required. However, there may be functional incentives to locate the chip inside the cap, in which case one or more electrical feed-through connections are required to conduct signals from the antennal patch to the IC chip.

The microstrip patch antenna is naturally adapted to metal caps because the metal cap serves as the ground-plane for the antenna. The complementary metal surface (i.e., the patch) of the microstrip antenna is positioned on top of the metal cap with an insulating spacer between the two metal surfaces.

Two radio frequency bands are allocated by the Federal Communications Commission for RFID systems, 2.4 GHz and 5.8 GHz. Both of these frequency bands are used for other applications, including wireless telephones and wireless local area networks.

The characteristic dimension of the antenna that causes it to be tuned to a specific frequency (and the harmonics of that frequency) is larger for the simple patch antenna (one-half wavelength) than it is for a one-quarter wavelength electric dipole antenna, although more complex patch antennas can be fabricated that are the same characteristic length. Consequently, the simplest (and least costly) of 2.45 GHz patch antennas would barely fit on top of the smallest standard metal cap (1 1/8 inch diameter). There are other design options that could make it possible, from a technical standpoint, to use 2.45 GHz, although at a higher manufacturing cost. Alternatively, the 5.8 GHz microstrip antenna has a characteristic dimension of less than 1 inch and thus fits more easily on the top of conventional metal bottle caps.

When using a microstrip patch antenna, the RFID IC chip may be located either outside of the metal cap or within the metal cap. Locating the IC chip on the outside surface results in lower manufacturing cost, since feed-throughs are required to connect the antenna to the IC chip when the IC chip is mounted within the metal cap. Although a single feed-through could be used to connect the antenna to the IC chip, thereby reducing manufacturing costs, when two feed-throughs are employed, the length of the antenna patch can be reduced by 50%.

The microstrip antenna is preferred for a metal cap because, when properly designed, (1) it is more efficient receiving and re-radiating the resonant RF energy, (2) it offers a low profile on the bottle cap and (3) there is sufficient space on the top of the bottle cap to place the antenna if the system is operated at 2.45 GHz or at 5.8 GHz. Furthermore, the higher frequency 5.8 GHz microstrip antenna allows more design freedom and could lead to a lower-cost metal cap with integral RFID tag.

The characteristic length of the antenna patch, and the dielectric permittivity of the insulating layer, determine the frequencies at which the antenna may be used. Consequently, the diameter of the metal cap is the main consideration in selecting one of the two frequency bands that have been allocated by the Federal Communications Commission in the U.S. for use in RFID systems. The 2.45 GHz frequency band is widely used for RFID applications, while only a few systems have been developed for RFID at the higher 5.8 GHz frequency band. However, relevant radio technology at 5.8 GHz has been developed extensively for other applications such as cordless telephones and wireless local area networks.

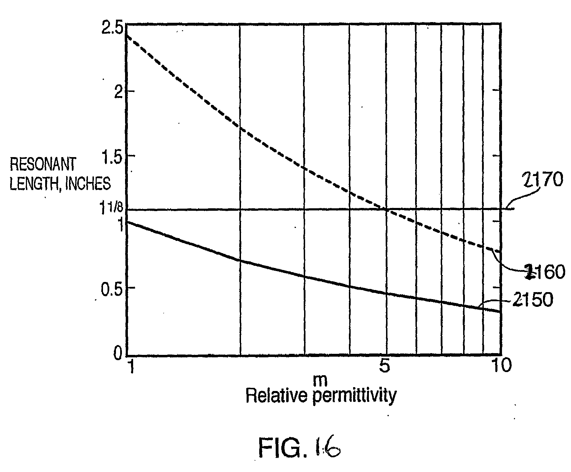

The characteristic length of the antenna patch is plotted as a function of the dielectric permittivity of the insulating layer at frequencies of 2.45 GHz (plot 2160) and 5.8 GHz (plot 2150) in FIG. 16. The thickness of the dielectric layer also has an effect on the characteristic length, at a given frequency, but the effect is much less than the permittivity. As seen from the plots, in order for the antenna patch to fit on the smallest standard size metal cap in the U.S. (i.e. a diameter of 1 1/8 inch shown as line 2170 in FIG. 16), the dielectric permittivity of the insulator for a 2.45 GHz antenna must be 5 or greater since only that portion of plot 2160 lies beneath line 2170. However, since plot 2150 lies entirely beneath line 2170, the patch will fit on the cap with any dielectric material for the 5.8 GHz antenna.

A table of the dielectric permittivity for various low-loss insulating materials manufactured by the Rogers Corp. is shown in Table I.

**TABLE I**

| Product (Rogers) | Composition | Relative dielectric constant |
|---|---|---|
| RT/duroid 5880 | PTFE glass fiber | 2.2 |
| RT/duroid 5870 | PTFE glass fiber | 2.33 |
| ULTRALAM 2000 | PTFE woven glass | 2.5 |
| RT/duroid 6002 | PTFE ceramic | 2.94 |
| RO3003 | PTFE ceramic | 3 |
| RO3203 | PTFE ceramic reinforced woven glass | 3.02 |
| TMM 3 | Hydrocarbon ceramic | 3.27 |
| RO4003C | Hydrocarbon ceramic | 3.38 |
| RO4350B | Hydrocarbon ceramic | 3.48 |
| RO4450B | Hydrocarbon ceramic prepreg | 3.54 |
| TMM 4 | Hydrocarbon ceramic | 4.5 |
| TMM 6 | Hydrocarbon ceramic | 6 |
| RT/duroid 6006 | PTFE ceramic | 6.15 |
| RO3006 | PTFE ceramic | 6.15 |
| TMM 10 | Hydrocarbon ceramic | 9.2 |
| TMM 10i | Hydrocarbon ceramic | 9.8 |
| RT/duroid 6010LM | PTFE ceramic | 10.2 |
| RO3010 | PTFE ceramic | 10.2 |
| RO3210 | PTFE ceramic reinforced woven glass | 10.2 |

The data from Fig. 16 and Table I demonstrates that several dielectric materials are available for a 2.45 GHz RFID microstrip antenna, e.g., TMM6 and RO3210. However, it is important to note that the antenna efficiency and therefore the sensitivity and range of the RFID tag, diminishes at higher values of permittivity (e.g., TMM6 is preferable over RO3210). This increases the need for precise impedance matching when employing an RFID tag operating at 2.45 GHz.

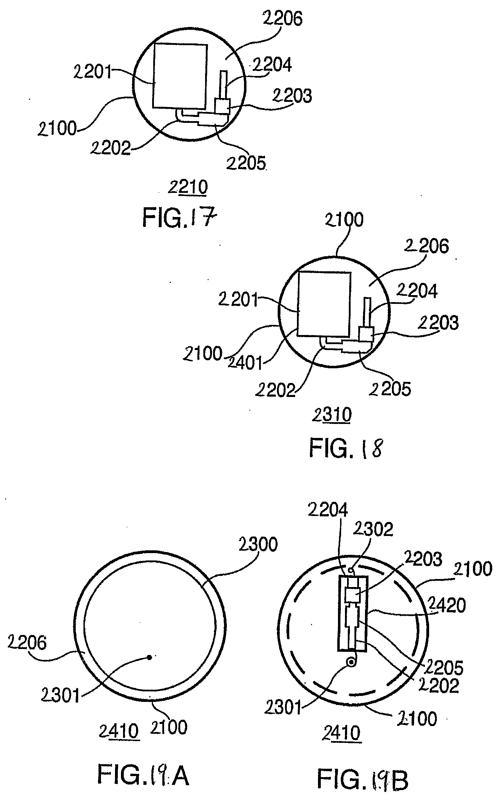

Figure 17 is a circuit diagram illustrating a first embodiment of this aspect of the present invention which is based upon a 5.8 GHz frequency band design. The RFID tag 2210 includes a fiberglass insulator 2206 having a relative permittivity 2.5 that is bonded to the top of metal cap 2100, an antenna 2201 that is mounted upon fiberglass insulator 2206, IC chip 2203, microstrip impedance-matching elements 2202 and 2205 which are also are mounted upon fiberglass insulator 2206 and which couple antenna 2201 to IC chip 2203, and microstrip ¼ -wave transformer 2204 that is also coupled to IC chip 2203 and which couples RF signals to the ground plane (i.e., the metal forming cap 2100) and eliminates the need for any direct electric connections between metal cap 2100 and the RFID circuit mounted on insulator 2206. This form of coupling is well known among those of skill in the art of RF design. The configuration of this embodiment provides the lowest RFID tag cost and is generally limited to applications communicating via a 5.8 GHz link, since for many applications there will be insufficient room on the top of the metal cap for a 2.45 GHz patch together with impedance matching elements and IC chip. Design details for the microstrip impedance matching elements 2202 and 2205 are known to those of skill in the art, see, e.g., K. Chang, RF and Microwave Wireless Systems, Section 3.9 "Microstrip Patch Antennas", Wiley Interscience ISBN 0-471-35199-7 (2000) which is incorporated herein by reference. The number of quarter wavelength sections required, and their specific dimensions, are selected on the basis of the width of the patch, the thickness of the dielectric, and the permittivity of the dielectric.

Since the simplest patch atennas have only a 2% to 5% bandwidth, it may be desirable in terms of manufacturability to increase the bandwidth of a microstrip patch antenna to ensure that RFID tags are not tuned away from the frequency of the associated interrogator due to variations in component tolerances that arise in the manufacturing process. As one of skill in the art will readily recognize, an RFID tag having an increased bandwidth will still be able to communicate with an associated interrogator, even if the center frequency of the RFID tag varies from its intended value because of manufacturing tolerances, the influence of nearby dielectric materials or other factors. One method to increase the bandwidth of a patch antenna is disclosed in U.S. Patent Publication No. 2003/0222763, incorporated herein by reference. In that publication, a method is disclosed that increases the bandwidth of a patch antenna by 14% or more by etching slots in the patch antenna. An example, based on the methods disclosed in this publication is shown in FIG. 18 for an RFID tag system 2310 that uses a 5.8 GHz patch antenna.

In particular, the RFID tag system 2310 includes the same components as the RFID tag system 2210 of FIG. 17 and discussed above. The only change is the addition of a slot 2401 in patch antenna 2201. Slot 2401 in antenna 2201 is asymmetrically shaped, and it is located off-center on the patch antenna 2201 which provides patch antenna 2201 with the effect of being two antennas that are closely spaced in frequency, thereby increasing the bandwidth thereof.

In some applications, it may be necessary to position the RFID IC chip be inside the metal cap. For example, it may be necessary to employ the RFID tags of the present invention in a larger system having interrogators that operate at a 2.8 GHz transmission frequency. In that case, since, as discussed above, the antenna patch could take up most of the area on the top of a metal cap, only the antenna patch could be positioned outside the metal cap and the antenna connected to the RFID chip is mounted inside the cap and connected to the external antenna via a feed-through connection, i.e., a wire connection that passes through the metal cap.

FIGS. 19A and 19B disclose an RFID tag system 2410 that operates at 2.8 GHz. FIG. 19A is a top view of cap 2100 and shows an insulator 2206 mounted on top of cap 2100, and circular antenna 2300 mounted on top of insulator 2206. Preferably, insulator 2206 is formed from Duroid 6006 (or comparable) dielectric material. Antenna 2300 is connected to the components located within cap 2100 via feedpoint 2301. As one of skill in the art will readily recognize, the location of feedpoint 2301 may be adjusted to optimize the impedance matching to the transmission line 2202 (FIG. 19B) on the inside of cap 2100. FIG. 19B shows a bottom view of cap 2100, showing feedpoint 2301 connecting to transmission line 2202, which, in turn, is connected to transmission line 2205. As in the previous examples transmission line 2205 is thereafter connected to RFID IC chip 2203. As one of skill in the art will readily recognize, the transmission lines 2202 and 2205 are used to optimize the coupling of patch antenna 2300 to IC chip 2203. IC chip 2203 is connected to transmission line 2204 for coupling to the ground plane formed by metal cap 2100 via connection 2302. IC chip 2203 and transmission line components 2202, 2204 and 2205 are attached to a thin substrate 2420. The physical connections between the transmissions lines 2202 and 2204 and connections 2301 and 2302, respectively, may be wire bonds, as shown, or alternatively, substrate 2420 may be connected in other ways, e.g., sweat soldered or ultrasonically bonded to the connections 2301 and 2302, as understood by one of skill in the art.

If the bandwidth of the system illustrated in FIGS. 19A and 19B proves to be too narrow due to manufacturing tolerance problems, etc., a band widening slot can be etched in antenna 2300 in a manner similar to that described with respect to the second embodiment of the present invention shown in FIG. 18.

The third example relates to an apparatus for verifying the payment of taxes or duties for the contents of a container, and is based upon the inclusion of an RFID tag associated with the container. The RFID tag contains an electronic code which contains information indicating whether a duty has been paid for the product associated with such RFID tag, e.g., a bottle of spirits. The RFID tag may also be programmed to include identification of the contents as well as other information relevant to supply chain operations. An interrogator is used to communicate with the RFID tag and may be a portable hand-held device or may be built into a computer, cash register, security exit, or the like. Whereas large counterfeiting operations in various countries are able to manufacture bottles, bottle caps, plastic bottle inserts, and labels that closely resemble authentic packaging, those same counterfeiting operations cannot afford the cost of developing the small, highly integrated radio chip. The RFID system may work at any of a variety of radio frequencies; however, the microwave frequency 2.45 Gigahertz is presently preferred because its smaller wavelength results in a shorter antenna and thus a smaller tag than lower frequency RFID tags. In addition, this microwave frequency has the advantage of being approved in most countries of the world for RFID applications. Furthermore, RFID devices that operate at 2.45 GHz are produced and marketed by several companies worldwide. Finally, the use of the spread-spectrum communications protocol and special code strategies for the information stored in the RFID tags effectively blocks counterfeiters from creating counterfeit or black-market RFID tags in order to avoid the payment of taxes or duties. Preferably, the RFID tag is mounted in the container cap (or other closure) and will be read by RFID interrogators used by legitimate organizers of the supply chain. When the cap is installed on the container there is an interconnection between the cap and the container such that when the cap is first removed from the container the RFID tag is disabled.

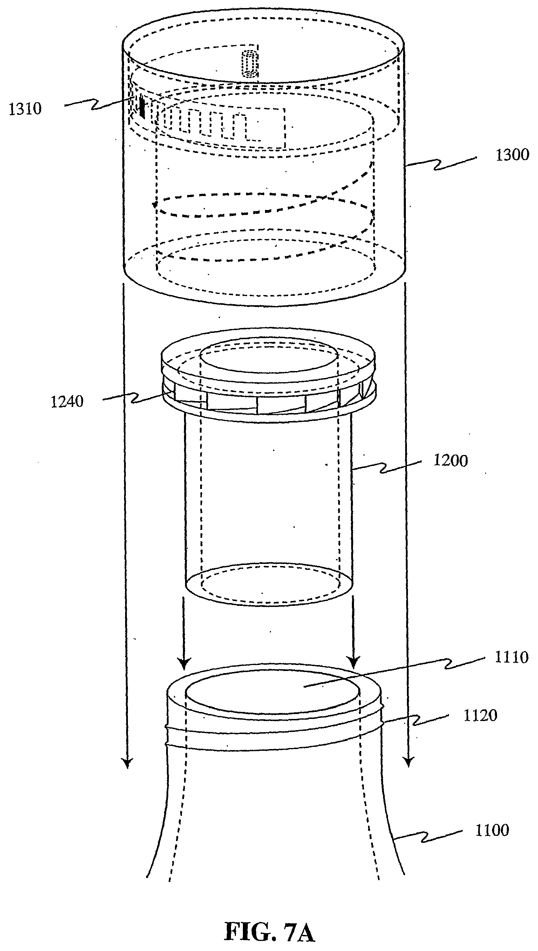

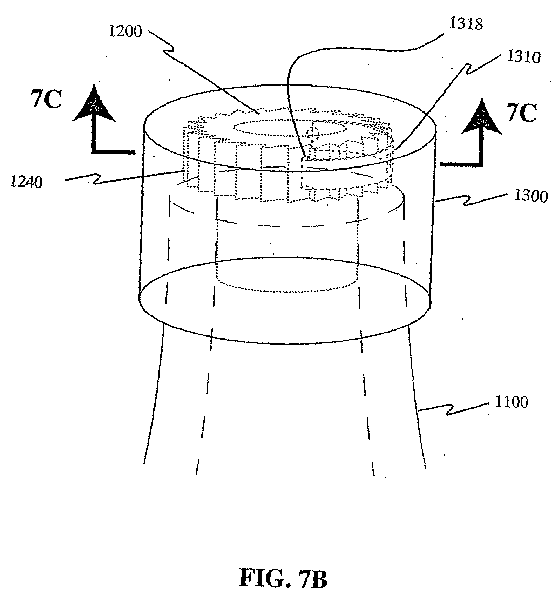

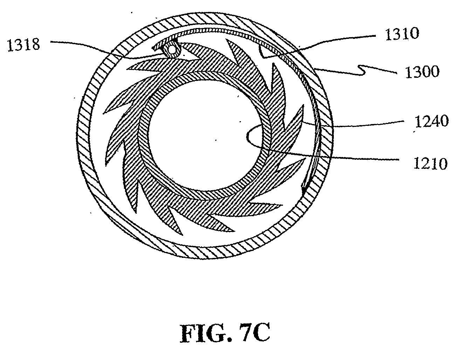

FIG. 7A is an exploded perspective view, FIG. 7B is a perspective view and FIG. 7C is a cross-sectional view of a presently preferred embodiment of the present invention. A bottle 1100 includes threads 1120 for securing a bottle cap over mouth 1110 thereof. According to this presently preferred embodiment of the invention, bottle 1100 is fitted with a tubular, preferably plastic, bottle insert 1200, that is tightly fitted into the mouth 1110 of bottle 1100. Bottle insert 1200 includes a ratchet wheel 1240. Thereafter, bottle 1100 is fitted with a cap 1300, also preferably of plastic, that screws onto threads 1120. Cap 1300 includes an RFID tag 1310 mounted near the closed end of cap 1300 such that it is longitudinally aligned with the ratchet wheel 1240 when cap 1300 is screwed tightly onto bottle 1100, with a cylindrical catch 1318 mounted on RFID tag 1310 interlocked with one of the plurality of ratchets on ratchet wheel 1240 (as specifically shown in FIG. 7B).

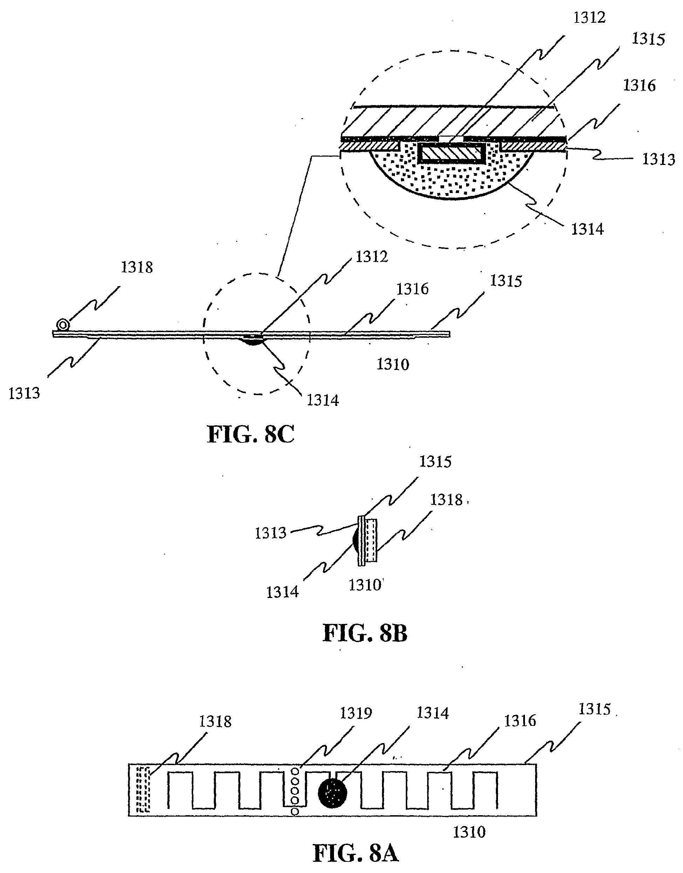

One embodiment of an RFID tag 1310 adapted for use in the present invention is shown in FIGS. 8A, 8B and 8C. As shown in FIG. 8A, the main electronic components of RFID tag 1310 include a radio frequency integrated circuit (RFIC) 1312 and an antenna 1316. Antenna 1316 is preferably a copper pattern consisting of two portions, although those of skill in the art will recognize that other materials and patterns may be used. Each portion of antenna 1316 is bonded to a thin semi-flexible substrate 1315 which, preferably, is composed of a type of fiberglass that is non-absorptive of the radio signal. RFIC 1312 typically is attached directly to the antenna using a "flip chip" process that is well known to those of skill in the art of integrated circuit fabrication technology. Although not shown in FIG. 8A, as shown in FIGS. 8B and 8C, RFIC 1312 is protectively supported by an epoxy coating 1314. In addition, as shown in FIGS. 8B and 8C, the top surface of RFID tag 1310 is preferably laminated with a plastic coating 1313 to protect antenna 1316. Such RFIC chips mounted on a substrate and sufficiently small for use in the present invention are currently marketed by several vendors, e.g., Intermec Technologies Corporation, Alien Technology Corporation, SCS Corporation, and Hitachi Ltd. Preferably, the RFID tag selected for use includes the capability to be permanently disabled by receipt of a command from an external communicator, so that, for example, the RFID tag can be disabled at checkout. As stated above, the smallest RFID tags operate at the 2.45 GHz radio frequency, which is accepted by most countries of the world for RFID applications.

In accordance with an aspect of the invention, as shown in FIG. 8A, a lateral perforation 1319 is provided near RFIC 1312 so that if both ends of RFID tag 1310 are pulled in opposite directions with sufficient tension, RFID tag 1310 will tear at lateral perforation 1319, thereby separating a significant part of the antenna 1316 from RFIC 1312. This separation renders RFID tag 1310 permanently inoperable. Perforation 1319 in RFID tag 1310 may be off-center, as it is shown in FIG. 8A. Alternatively, in configurations where RFID chip 1312 is mounted in a hole (not shown) in the substrate 1315 of RFID tag 1310, perforation 1319 is unnecessary because the hole provided for RFIC 1312 will be the weakest point mechanically of RFID tag 1310 when no perforation 1319 is present. RFID tag 1310 will thus naturally fracture at the location of RFIC 1312 in this configuration. This fracture location, at RFIC 1312, is presently preferred because it results in more complete disablement of RFID tag 1310 since there will no connection whatsoever to at least one of the two portions of antenna 1316. In addition, with this configuration, it is also possible that when the RFID tag 1310 is damaged by opening the bottle, RFIC 1312 could be damaged also contributing to the permanent disablement of the RFID tag 1310.

In a presently preferred embodiment, RFID tag 1310 further includes a protrusion in the form of a cylindrical catch 1318 that is bonded close to an end thereof. Preferably, cylindrical catch 1318 is bonded to RFID tag 1310 on the side opposite to the side on which antenna 1316 is mounted. Cylindrical catch 1318 is preferably formed from a flexible material in a hollow tubular form. As discussed in more detail below, cylindrical catch 1318 is part of the mechanism by which RFID tag 1310 is mechanically disabled when bottle cap 1300 is unscrewed from bottle 1100 for the first time after being sealed at the bottling facility. In an alternative embodiment, RFID tag 1310 includes a slot in substrate 1315 instead of catch 1318. The formation of the slot in this alternative embodiment is discussed in further detail below.

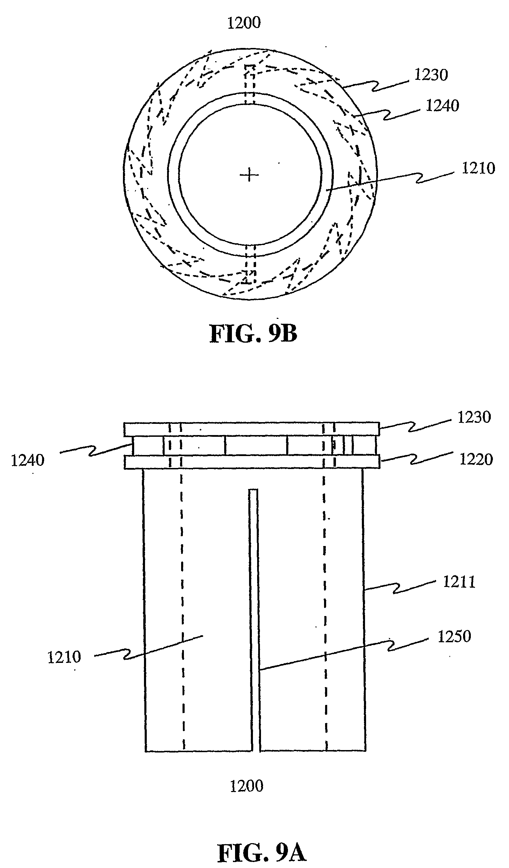

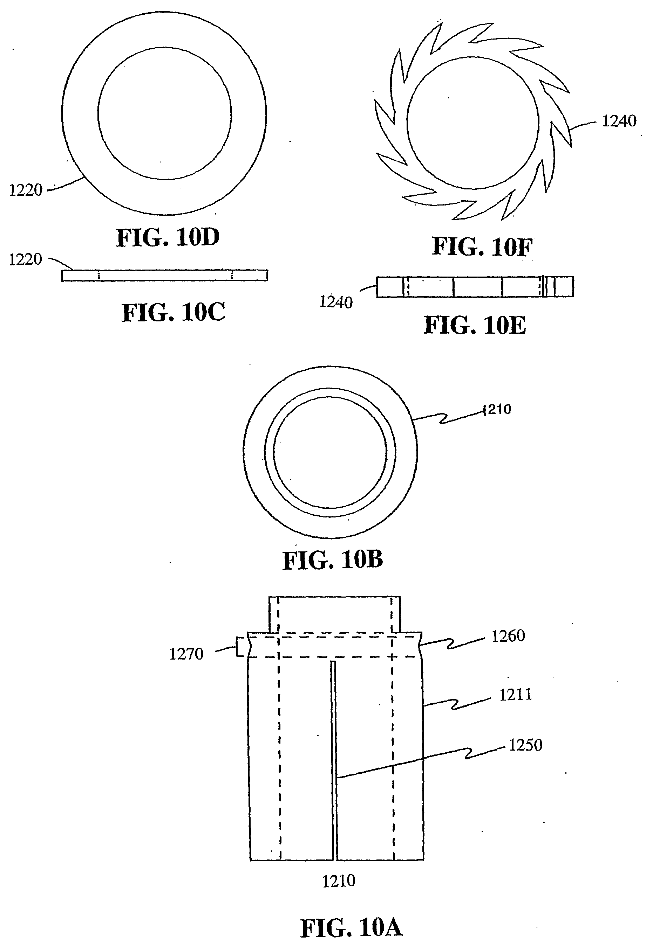

Referring now to FIGS. 9 and 10, bottle insert 1200 includes a central column 1210 having an outside diameter at the surface 1211 that is large enough to cause a tight fit when it is pressed into bottle 1100 (FIG. 7). It is necessary that the fit be sufficiently tight so as to prevent bottle insert 1200 from rotating inside bottle 1100 when cap 1300 is removed for the first time. Optionally, one or more narrow longitudinal cuts 1250 may be made through a wall of central column 1260 to provide some stress relief as bottle insert 1200 is pressed into bottle 1100. Also, there may be two or more radial rib members (not shown) supporting the wall of central column 1260 that allow it to flex locally as bottle insert 1200 enters bottle 1100, and then to expand as bottle insert 1200 passes the narrowest diameter of mouth 1110 of bottle 1100. Since most bottles for alcoholic beverages are tapered on the inside, with the orifice being the smallest inside diameter, as seen in FIG. 10A, a shallow narrowing in the area 1270 of central column 1260 may preferably be provided to conform to the tapered orifice of bottle 1100, thus providing increased friction between bottle insert 1200 and bottle 1100. As recognized by those of skill in the art, various other techniques may be used to ensure that bottle insert 1200 fits tightly in mouth 1110 of bottle 1100.

Bottle insert 1200 preferably includes two discs 1220 and 1230 and ratchet wheel 1240 that are pressed or bonded onto the top end of the central column 1260. Discs 1220 and 1230 fit on either side of ratchet wheel 1240. Plain disc 1220 is mounted below ratchet wheel 1240 and acts as a spacer mechanism to separate ratchet wheel 1240 from mouth 1110 of bottle 1100 and to provide a mechanical buffer that prevents damage to ratchet wheel 1240 when bottle insert 1200 is pressed into bottle 1100. Upper plain disc 1230 provides a pouring surface which may preferably be contoured to provide various improvements in pouring the contents from bottle 1100, although these contours are not shown in FIGS. 9 and 10.

As one of skill in the art will readily recognize, although bottle insert 1200 is shown as formed from four parts, bottle insert 1200 may also be manufactured as a single molded part or the central column 1210 may be combined with lower plain disc 1220 and ratchet wheel 1240 to form a single molded component to which top disc 1230 is attached during assembly. Alternatively, as one of skill in the art will readily recognize, one or both of plain discs 1220 and 1230 may also be eliminated. In addition, it is possible that the ratchet wheel or other protrusions could be formed directly on bottle 1100 between threads 1120 and mouth 1110.

Ratchet wheel 1240 operates as a conventional ratchet wheel and provides a ratchet action in combination with the catch 1318. Ratchet wheel 1240 allows cap 1300 to be twisted onto bottle 1100, which conventionally has a right-handed thread 1120, because catch 1318 attached to the RFID tag 1310 forces the serrations on ratchet wheel 1240 inward. However, when an attempt is made to remove cap 1300 from bottle 1100, a counterclockwise torque will be applied to cap 1300, pressing catch 1318 against one of the serrations on ratchet wheel 1240. As the torque is increased on cap 1300, catch 1318 will, in effect, pull on one end of RFID tag 1310 while the opposite end of RFID tag 1310 is permanently affixed to cap 1300, eventually causing RFID tag 1310 to break at perforation 1319 (or, in the event that no perforation is provided, at the weakest point of substrate 1316). As one of ordinary skill will readily recognize, the form and number of the ratchets on ratchet wheel 1240 or other protrusions are not significant so long as they do not interact with substrate 1315 when cap 1300 is being installed on bottle 1100 and interact with substrate 1315 when cap 1300 is being removed from bottle 1100. In the alternative embodiment where RFID tag 1310 includes a slot instead of catch 1318, the ratchets on ratchet wheel 1240 or other protrusions extend outward beyond the outer circumference of bottle 1100 at mouth 1110 such that the ratchets or other protrusions contact cap 1300. In this alternative embodiment, the indentation on RFID tag 1310 is formed so that the ratchets on ratchet wheel 1240 or other protrusions pass over when cap 1300 is being installed on bottle 1100, but they do not pass over the indentation when cap 1300 is being removed from bottle 1100. In both embodiments, the result is the same, removal of cap 1300 for the first time generates a lateral force along RFID tag 1310 that results in the fracture of substrate 1318 and total disablement of RFID tag 1310.

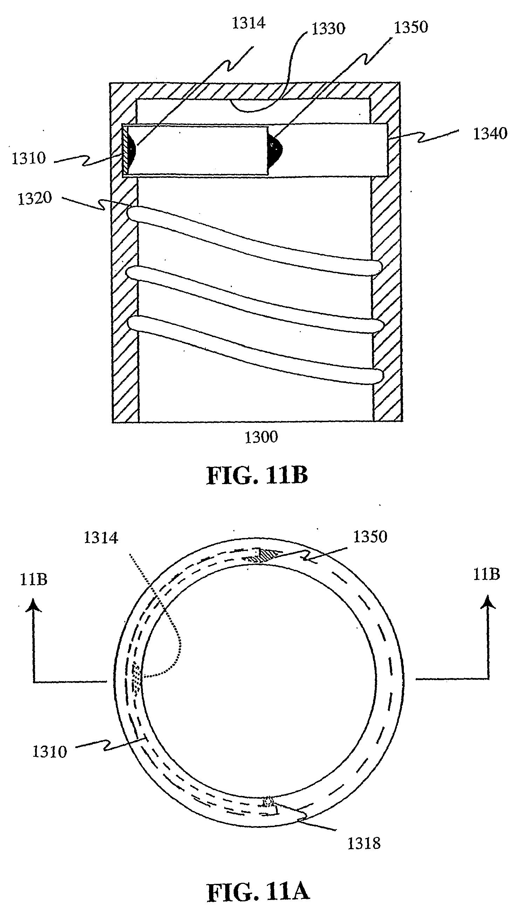

FIG. 11 shows how RFID tag 1310 is mounted in cap 1300. Cap 1300 preferably includes a recess 1340 between an end of internal thread 1320 and the inside end 1330. Recess 1340 is only slightly wider than RFID tag 1310. During manufacture of cap 1300, RFID tag 1310 is installed in recess 1340 and permanently affixed to cap 1300 at an end 1350 of RFID tag 1310 opposite end at which catch 1318 is mounted. RFID tag 1310 is oriented upon installation such that as cap 1300 is screwed onto bottle 1100, the serrations on bottle insert 1200 pass over catch 1318 and also push RFID tag 1310 into a slight compression against the walls of cap 1300. When cap 1300 is screwed tightly onto the bottle, the serrations on ratchet wheel 1240 will line up longitudinally with the catch 1318 on RFID tag 1310. At some later time, when cap 1300 is unscrewed from bottle 1100 for the first time, the serrations on bottle insert 1200 will snag on catch 1318 as discussed above and the torque on cap 1300 will apply a longitudinal force along the length of RFID tag 1310, essentially stretching RFID tag 1310 along its longitudinal axis and causing RFID tag 1310 to break into two parts, either at perforation 1319, if present, or at some other weak point of RFID tag 1310, e.g., at the RFIC 1312 mounting point. Breaking of RFID tag 1310 into two parts will permanently disable RFID tag 1310 because it will no longer be able to communicate due to a significant change in the characteristics of antenna 1316.

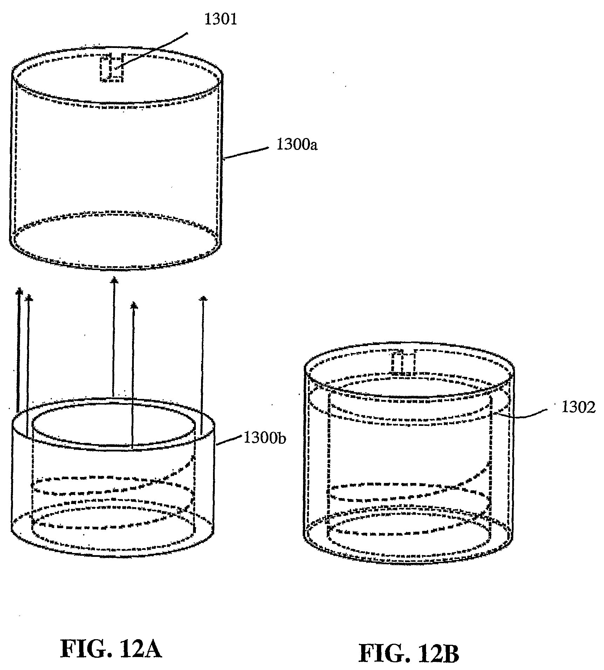

The plastic cap 1300 as previously described is composed of two pieces (1300a,1300b) which are pressed together during assembly. This is because of the need for a recess region 1301 inside the cap. In order for the cap to be released from the injection mold, the cap should be made in two pieces. Those pieces are shown in FIG. 12. The recessed region 1301 does not extend uninterrupted around the inside of the cap. There is a barrier 1302 that prevents the broken part of the tag 1310 from circulating all the way around the recession when the cap is removed from the bottle. This barrier 1302 is visible as hidden lines in FIG. 12b.

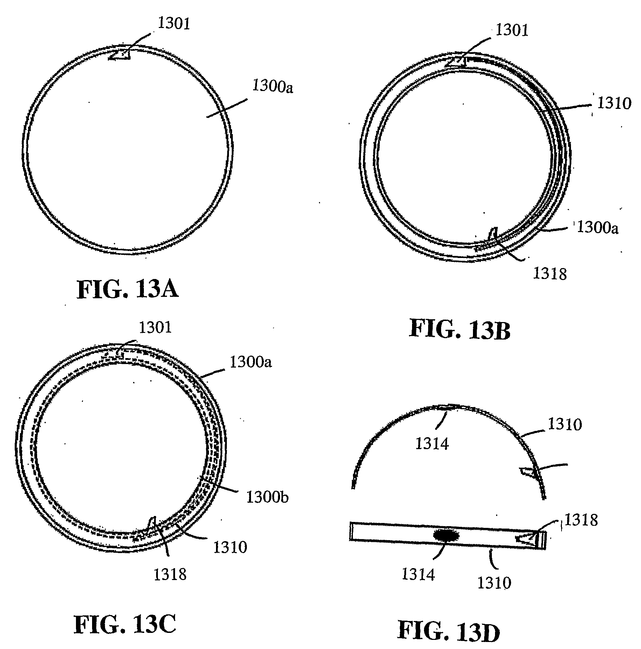

The RFID tag 1310 and the recess barrier 1302 are more clearly visible in FIG. 13. The RFID tag may be bonded into the recessed region 1301 of the cap near the barrier 1302 as shown, or it may be locked into place by a narrow slot at the time that the two-piece cap is pressed together (not shown).

The tag 1310 has a mechanical coiling bias built into it so that when the tag is fully intact, it attempts to coil radially inward and to spring the catch mechanism inward so that it will be snagged by the ratchet wheel 1240 as the bottle 1100 is opened for the first time.

The barrier 1302 has a taper on the side opposite the secured tag such that if the broken end of the tag 1310 were to travel all the way around the inside of the cap in the recession, the catch mechanism of the tag is forced in an outward radial motion and will be released by the ratchet tooth of the bottle insert.

A "tag collar" is located adjacent radially to the RFID tag so that the broken end of the tag does not fall out of the cap when the cap is removed from the bottle. A small aperture in the collar allows the catch mechanism to protrude into the ratchet mechanism of the bottle insert, but it does not allow the broken segment of tag to slip out.

The catch mechanism 1318 may also have a taper, shown in FIG. 13, and the upper and lower plain discs of the bottle insert assembly may have bevels as shown in FIG. 14. As the cap 1300 is screwed onto the bottle 1100 or off from the bottle, the taper on the catch mechanism and the bevels on the plain discs push the catch mechanism 1318 outwards radially so that the cap can move past the catch mechanism without being hung up.

Those skilled in the art will recognize that the RFID tag of the invention could be placed in different locations and many other forms of RFID structures could be used. In addition, various types of structures can be used to provide an interconnection between the cap and container such that when the cap is first removed, the RFID tag will become disabled. Thus, numerous changes and modifications can be made while staying within the scope of the invention which is set forth in the appended claims.

## Claims

1. An apparatus for use in detecting the authenticity of a container (1100) sealed with a cap (1300), comprising:
a radio frequency identification tag (1310) comprising a substrate (1315), a radio frequency transceiver circuit (1312) adapted to transmit a signal upon receipt of a transmit command and mounted upon said substrate (1315), an antenna (1316) having a fixed length mounted upon said substrate (1315) and connected to said radio frequency transceiver circuit (1312), and a first interconnection means (1318) on said substrate (1315);
a cap (1300) for a container (1100) having a cylindrical portion, a closed end of said cylindrical portion and an open end of said cylindrical portion; and
a second interconnection means (1240) connected to said container (1100) for engaging said first interconnection means (1318) when said cap (1300) is installed on said container (1100) such that removing said cap (1300) from said container (1100) will exert force on said substrate (1315) resulting in the fracture of said substrate (1315) thereby causing said radio frequency identification tag (1310) to become permanently disabled;
**characterized in that** said radio frequency identification tag (1310) is mounted on an inner surface of said cylindrical portion of said cap (1300) adjacent to said closed end such that said first interconnection means (1318) faces centrally inward and **in that** said first interconnection means (1318) is a protrusion affixed to said substrate or a slot in said substrate, and said second interconnection means (1240) comprises ratcheting means.

2. The apparatus of claim 1, further comprising a security seal (160) mounted over said substrate (1315), said radio frequency transceiver circuit (1312) and said antenna (1316).

3. A method for use in detecting the authenticity of a container (1100) sealed with a cap (1300), said cap (1300) having a cylindrical portion, a closed end of said cylindrical portion and an open end of said cylindrical portion, comprising the steps of:
mounting a radio frequency identification tag (1310) on said cap (1300), the radio frequency identification tag (1310) comprising a substrate (1315), a radio frequency transceiver circuit (1312) adapted to transmit a signal upon receipt of a transmit command and mounted upon said substrate (1315), an antenna (1316) having a fixed length mounted upon said substrate (1315) and connected to said radio frequency transceiver circuit (1312), and a first interconnection means (1318) on said substrate (1315);
installing said cap (1300) on said container (1100) such that a second interconnection means (1240) connected to said container (1100) is engaged with said first interconnection means (1318);
**characterized in that** said radio frequency identification tag (1310) is mounted on an inner surface of said cylindrical portion of said cap (1300) adjacent to said closed end such that said first connection means (1318) faces centrally inward; said first interconnection means (1318) is a protrusion affixed to said substrate (1315) or a slot in said substrate (1315), and said second interconnection means (1240) comprises ratcheting means;
the method further **characterized in** permanently disabling said radio frequency identification tag (1310) upon fracture of said substrate (1315) due to exertion of force on said substrate (1315) resulting from removal of said cap (1300) from said container (1100) and engagement between the first and second interconnections means (1318, 1240).

4. The method of claim 3, wherein said antenna (1316) has a first end connected to the container (1100) and a second end connected to the cap (1300), and said step of disabling is accomplished by separating portions of said antenna (1316) thereby preventing said radio frequency transceiver circuit (1312) from receiving any commands.

## Patentansprüche

1. Vorrichtung zur Verwendung beim Detektieren der Unversehrtheit eines Behälters (1100), der mit einer Kappe (1300) verschlossen ist, umfassend:
eine Hochfrequenzidentifikationsmarke (1310), die ein Substrat (1315), eine Hochfrequenz-Transceiver-Schaltung (1312), die dazu angepasst ist, ein Signal bei Empfang eines Sendebefehls zu übertragen, und auf dem Substrat (1315) montiert ist, eine Antenne (1316) mit einer festen Länge, die auf dem Substrat (1315) montiert und an die Hochfrequenz-Transceiver-Schaltung (1312) angeschlossen ist und ein erstes Verbindungsmittel (1318) auf dem Substrat (1315) umfasst;
eine Kappe (1300) für einen Behälter (1100) mit einem zylindrischen Abschnitt, einem geschlossenen Ende des zylindrischen Abschnitts und einem offenen Ende des zylindrischen Abschnitts; und
ein zweites Verbindungsmittel (1240), das mit dem Behälter (1100) zum Eingreifen mit dem ersten Verbindungsmittel (1318) verbunden ist, wenn die Kappe (1300) auf dem Behälter (1100) angebracht ist, so dass ein Entfernen der Kappe (1300) von dem Behälter (1100) eine Kraft auf das Substrat (1315) ausübt, was zu dem Bruch des Substrats (1315) führt, und dadurch bewirkt, dass die Hochfrequenzidentifikationsmarke (1310) dauerhaft deaktiviert wird;
**dadurch gekennzeichnet, dass** die Hochfrequenzidentifikationsmarke (1310) auf einer Innenfläche des zylindrischen Abschnitts der Kappe (1300) benachbart dem geschlossenen Ende montiert ist, so dass das erste Verbindungsmittel (1318) zentral nach innen gewandt ist, und dass das erste Verbindungsmittel (1318) ein Vorsprung, der an dem Substrat befestigt ist, oder ein Schlitz in dem Substrat ist, und das zweite Verbindungsmittel (1240) eine Sperrvorrichtung umfasst.

2. Vorrichtung nach Anspruch 1, weiter umfassend eine Sicherheitsdichtung (160), die über dem Substrat (1315), der Hochfrequenz-Transceiver-Schaltung (1312) und der Antenne (1316) montiert ist.

3. Verfahren zur Verwendung beim Detektieren der Unversehrtheit eines Behälters (1100), der mit einer Kappe (1300) verschlossen ist, wobei die Kappe (1300) einen zylindrischen Abschnitt, ein geschlossenes Ende des zylindrischen Abschnitts und ein offenes Ende des zylindrischen Abschnitts aufweist, umfassend die folgenden Schritte:
Montieren einer Hochfrequenzidentifikationsmarke (1310) an der Kappe (1300), wobei die Hochfrequenzidentifikationsmarke (1310) ein Substrat (1315), eine Hochfrequenz-Transceiver-Schaltung (1312), die dazu angepasst ist, ein Signal bei Empfang eines Sendebefehls zu übertragen, und auf dem Substrat (1315) montiert ist, eine Antenne (1316) mit einer festen Länge, die auf dem Substrat (1315) montiert und an die Hochfrequenz-Transceiver-Schaltung (1312) angeschlossen ist, und ein erstes Verbindungsmittel (1318) auf dem Substrat (1315) umfasst;
Anbringen der Kappe (1300) auf dem Behälter (1100), so dass ein zweites Verbindungsmittel (1240), das mit dem Behälter (1100) verbunden ist, in das erste Verbindungsmittel (1318) eingreift;
**dadurch gekennzeichnet, dass** die Hochfrequenzidentifikationsmarke (1310) auf einer Innenfläche des zylindrischen Abschnitts der Kappe (1300) benachbart dem geschlossenen Ende montiert ist, so dass das erste Verbindungsmittel (1318) zentral nach innen gewandt ist; das erste Verbindungsmittel (1318) ein Vorsprung, der an dem Substrat (1315) befestigt ist, oder ein Schlitz in dem Substrat (1315) ist, und das zweite Verbindungsmittel (1240) eine Sperrvorrichtung umfasst.
das Verfahren weiter **dadurch gekennzeichnet ist, dass** die Hochfrequenzidentifikationsmarke (1310) bei Bruch des Substrats (1315) durch Ausüben einer Kraft auf das Substrat (1315), die aus dem Entfernen der Kappe (1300) von dem Behälter (1100) und einem Eingriff zwischen dem ersten und zweiten Verbindungsmittel (1318, 1240) resultiert, dauerhaft deaktiviert wird.

4. Verfahren nach Anspruch 3, wobei die Antenne (1316) ein erstes Ende, das mit dem Behälter (1100) verbunden ist, und ein zweites Ende, das mit der Kappe (1300) verbunden ist, aufweist, und der Schritt des Deaktivierens durch Trennen von Abschnitten der Antenne (1316) erreicht wird, wodurch verhindert wird, dass die Hochfrequenz-Transceiver-Schaltung (1312) Befehle empfangen kann.

## Revendications

1. Un appareil utilisé pour détecter l'authenticité d'un conteneur (1100) scellé avec un bouchon (1300), comprenant :
une étiquette d'identification par radiofréquence (1310) comprenant un substrat (1315), un circuit émetteur-récepteur de radiofréquence (1312) adapté à la transmission d'un signal sur réception d'une commande de transmission et monté sur ledit substrat (1315), une antenne (1316) d'une longueur fixe montée sur ledit substrat (1315) et connectée audit circuit émetteur-récepteur de radiofréquence (1312), et un premier moyen d'interconnexion (1318) sur ledit substrat (1315) ;
un capuchon (1300) pour un conteneur (1100) ayant une partie cylindrique, une extrémité fermée de ladite partie cylindrique et une extrémité ouverte de ladite partie cylindrique ; et
un deuxième moyen d'interconnexion (1240) connecté audit conteneur (1100) pour l'engagement dudit premier moyen d'interconnexion (1318) lorsque ledit capuchon (1300) est installé sur ledit conteneur (1100), de manière à ce que le retrait dudit capuchon (1300) dudit conteneur (1100) exerce une force sur ledit substrat (1315), résultant en la fracture dudit substrat (1315), causant ainsi la désactivation permanente de ladite étiquette d'identification par radiofréquence (1310) ;
**caractérisé en ce que** ladite étiquette d'identification par radiofréquence (1310) est montée sur une surface intérieure de ladite partie cylindrique dudit capuchon (1300) adjacente à ladite extrémité fermée, de manière à ce que ledit premier moyen d'interconnexion (1318) soit orienté centralement vers l'intérieur, et par le fait que ledit premier moyen d'interconnexion (1318) est une saillie apposée sur ledit substrat ou une fente dans ledit substrat, et que le deuxième moyen d'interconnexion (1240) comprend un moyen d'encliquetage.

2. L'appareil de la revendication 1, comprenant d'autre part un sceau de sécurité (160) monté sur ledit substrat (1315), ledit circuit émetteur-récepteur de radiofréquence (1312) et ladite antenne (1316).

3. Une méthode utilisée pour détecter l'authenticité d'un conteneur (1100) fermé par un capuchon (1300), ledit capuchon (1300) ayant une partie cylindrique, une extrémité fermée de ladite partie cylindrique et une extrémité ouverte de ladite partie cylindrique, comprenant les étapes suivantes :
le montage d'une étiquette d'identification par radiofréquence (1310) sur ledit capuchon (1300), l'étiquette d'identification par radiofréquence (1310) comprenant un substrat (1315), un circuit émetteur-récepteur de radiofréquence (1312) adapté à la transmission d'un signal sur réception d'une commande de transmission et monté sur ledit substrat (1315), une antenne (1316) de longueur fixe montée sur ledit substrat (1315) et connectée audit circuit émetteur-récepteur de radiofréquence (1312), et un premier moyen d'interconnexion (1318) sur ledit substrat (1315) ;
l'installation dudit capuchon (1300) sur ledit conteneur (1100) de manière à ce qu'un deuxième moyen d'interconnexion (1240) connecté audit conteneur (1100) soit engagé avec ledit premier moyen d'interconnexion (1318) ;
**caractérisé en ce que** ladite étiquette d'identification par radiofréquence (1310) est montée sur une surface interne de ladite partie cylindrique dudit capuchon (1300) adjacente à ladite extrémité fermée, de manière à ce que ledit premier moyen d'interconnexion (1318) soit orienté centralement vers l'intérieur ; ladite première interconnexion (1318) est une saillie apposée audit substrat (1315) ou à une fente dans ledit substrat (1315), et ledit deuxième moyen d'interconnexion (1240) se compose d'un moyen d'encliquetage ;
la méthode étant en outre **caractérisée par** la désactivation permanente de ladite étiquette d'identification par radiofréquence (1310) sur fracture dudit substrat (1315) en raison de la force exercée sur ledit substrat (1315) suite au retrait dudit capuchon (1300) dudit conteneur (1100) et à l'engagement entre le premier moyen et le deuxième moyen d'interconnexion (1318, 1240).

4. La méthode de la revendication 3, dans laquelle ladite antenne (1316) a une première extrémité connectée au conteneur (1100) et une deuxième extrémité connectée au capuchon (1300), et que ladite étape de désactivation s'accomplit par la séparation des parties de ladite antenne (1316), empêchant ainsi le circuit émetteur-récepteur de radiofréquence (1312) de recevoir une quelconque commande.
